(19) Europäisches Patentamt
European Patent Office
Office européen des brevets

(11) **EP 3 718 883 B1**

(12) **FASCICULE DE BREVET EUROPEEN**

(45) Date de publication et mention de la délivrance du brevet:
**13.07.2022 Bulletin 2022/28**

(21) Numéro de dépôt: **20168029.5**

(22) Date de dépôt: **03.04.2020**

(51) Classification Internationale des Brevets (IPC):
**B64C 25/44** (2006.01)    **B60T 8/17** (2006.01)
**B60T 8/171** (2006.01)    **B60T 8/172** (2006.01)
**B60T 13/68** (2006.01)    **B60T 8/32** (2006.01)
**B60T 13/66** (2006.01)    **B60T 17/22** (2006.01)
**B60T 8/34** (2006.01)    **B64C 25/42** (2006.01)

(52) Classification Coopérative des Brevets (CPC):
**B60T 8/1703; B60T 13/662; B60T 13/686;**
**B60T 17/221; B64C 25/42; B64C 25/44;**
B60T 8/325

(54) **PROCEDE DE PILOTAGE D'UN DISPOSITIF DE FREINAGE**

STEUERVERFAHREN EINER BREMSVORRICHTUNG

METHOD FOR CONTROLLING A BRAKING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2019 FR 1903701**

(43) Date de publication de la demande:
**07.10.2020 Bulletin 2020/41**

(73) Titulaire: **Safran Landing Systems**
**78140 Vélizy-Villacoublay (FR)**

(72) Inventeurs:
• **LESTAGE, Jean-Baptiste**
**77550 Moissy-Cramayel (FR)**
• **BRUN, Emmanuel**
**77550 Moissy-Cramayel (FR)**
• **GRAILLAT, Tiphaine**
**77550 Moissy-Cramayel (FR)**

(74) Mandataire: **Lavialle, Bruno François Stéphane**
**Cabinet Boettcher**
**16, rue Médéric**
**75017 Paris (FR)**

(56) Documents cités:
**EP-A1- 2 508 398**    **WO-A1-00/69721**
**DE-A1- 4 227 157**    **FR-A1- 2 691 935**
**US-A- 5 456 523**    **US-A1- 2018 326 955**

EP 3 718 883 B1

**EP 3 718 883 B1**

**Description**

DOMAINE DE L'INVENTION

L'invention concerne le domaine du freinage et plus particulièrement un procédé de pilotage d'un dispositif hydraulique de freinage.

ARRIERE PLAN DE L'INVENTION

Un dispositif de freinage d'un aéronef comprend classiquement une servovalve reliée à un actionneur hydraulique exerçant sélectivement une pression sur une pile de disques de freinage comprenant au moins un disque solidaire en rotation d'une roue. Une unité de commande convertit une instruction de freinage, donnée par le pilote (via une pédale de frein par exemple) ou par un dispositif de gestion automatique, en un signal de commande d'une pression hydraulique d'alimentation de l'actionneur. Le freinage étant généralement appliqué sur deux roues, le dispositif comprend deux servovalves dédiées respectivement à une première et une deuxième roue. Le document US5456523 décrit un dispositif d'alimentation à source hydraulique unique et le document US20180326955 décrit un dispositif à actionneur de freinage unique par roue freinée. Pour des questions de sécurité, l'aéronef comprend fréquemment une première et une deuxième sources hydrauliques reliées toutes deux aux servovalves. Deux configurations peuvent alors être mises en œuvre. Selon une première configuration, l'alimentation des servovalves est réalisée par la première source et, en cas de défaillance de la première source, l'alimentation des servovalves est réalisée par la deuxième source. Selon une deuxième configuration, l'alimentation des servovalves est réalisée simultanément par la première source et la deuxième source. Quelle que soit la configuration retenue, un tel dispositif de freinage ne permet pas de se prémunir contre une défaillance d'une ou des deux servovalves. Ainsi, il peut être nécessaire de doubler les servovalves alimentant les actionneurs de freinage, ce qui cause une augmentation de la masse du dispositif de freinage et de son coût. Un tel dispositif est abordé dans le docuemnt DE4227157. Enfin, les pressions délivrées par des servovalves soumises à un même signal de commande pouvant être différentes, il peut en résulter un déséquilibre de freinage entre les deux roues. Un tel déséquilibre est inconfortable pour les passagers, amène une difficulté supplémentaire pour le pilote (gestion de trajectoire) et provoque une usure différenciée des disques de freinage qui augmente les coûts de maintenance (les disques sont généralement changés sur les deux freins en même temps).

OBJET DE L'INVENTION

Un objet de l'invention est de réduire les coûts liés à un dispositif de freinage tout en en améliorant la fiabilité.

RESUME DE L'INVENTION

A cet effet, on prévoit un procédé de pilotage d'un dispositif de freinage hydraulique comprenant une première servovalve, une deuxième servovalve, une troisième servovalve, un premier frein d'une première roue comprenant au moins un premier et un deuxième actionneur de freinage pour appliquer un premier couple de freinage sur la première roue et un deuxième frein d'une deuxième roue comprenant au moins un troisième et un quatrième actionneur de freinage pour appliquer un deuxième couple de freinage sur la deuxième roue. La première servovalve est agencée pour délivrer une première pression au premier actionneur, la deuxième servovalve est agencée pour délivrer une deuxième pression au troisième actionneur et la troisième servovalve est agencée pour délivrer une troisième pression au deuxième actionneur ainsi qu'au quatrième actionneur. Selon l'invention, le procédé comprend les étapes suivantes :

- recevoir une instruction de couple de freinage ;
- sur la base de l'instruction de couple de freinage reçue, établir une première consigne de couple de freinage pour le premier frein et une deuxième consigne de couple de freinage pour le deuxième frein ;

- mesurer une première valeur d'un premier paramètre représentatif du premier couple de freinage ;
- définir une première pression moyenne d'alimentation à appliquer sur le premier frein en fonction de la première valeur du premier paramètre et de la première consigne de freinage à l'aide d'une première boucle d'asservissement ;
- mesurer une deuxième valeur d'un deuxième paramètre représentatif du deuxième couple de freinage ;
- définir une deuxième pression moyenne d'alimentation à appliquer sur le deuxième frein en fonction de la deuxième valeur du deuxième paramètre et de la deuxième consigne de freinage à l'aide d'une deuxième boucle d'asservissement ;
- sur la base de la première pression moyenne d'alimentation et la deuxième pression moyenne d'alimentation, définir une première consigne de pression, une deuxième consigne de pression et une troisième consigne de pression ;

2

- appliquer la première consigne de pression à la première servovalve, la deuxième consigne de pression à la deuxième servovalve et la troisième consigne de pression à la troisième servovalve.

On obtient ainsi une commande directe du couple de freinage appliqué, ce qui permet de maintenir un couple sensiblement identique sur chacun des freins ce qui limite l'usure différentiel des piles de disques de chaque frein et permet de réduire les coûts de maintenance et d'optimiser l'utilisation des piles de disques. En effet, les piles de disques de chaque frein étant sollicitées de manière identique, elles s'usent de manière identique, ce qui justifie le changement de l'ensemble des piles de disques d'un même aéronef en une unique opération. Ainsi, on diminue l'occurrence d'une situation dans laquelle un frein usé est changé, et ce changement requiert également le changement d'une autre pile de disques qui pourrait encore être utilisée. Enfin, une commande précise du couple de freinage permet de réduire les contraintes de dimensionnement des organes de freinage et d'ainsi optimiser la masse des freins, la structure du train d'atterrissage et potentiellement le fuselage de l'avion.

Avantageusement, le procédé comprend l'étape supplémentaire de limiter la vitesse d'augmentation de la première consigne de pression et/ou de la deuxième consigne de pression et/ou de la troisième consigne de pression.

Avantageusement, l'étape de définir une première consigne de pression, une deuxième consigne de pression et une troisième consigne de pression comprend les opérations suivantes :

- définir une valeur de la première pression moyenne d'alimentation du premier frein ;
- définir une valeur de la deuxième pression moyenne d'alimentation du deuxième frein ;
- établir la valeur de la troisième consigne de pression ;
- établir la valeur de la première consigne de pression à une valeur égale à :

$$Cp1 = |2*P1 - Cp3|$$

Où Cp1 est la valeur de la première consigne de pression, P1 est la valeur de la première pression moyenne d'alimentation, et Cp3 est la valeur de la troisième consigne de pression ;

- établir la valeur de la deuxième consigne de pression à une valeur égale à :

$$Cp2 = |2*P2 - Cp3|$$

Où Cp2 est la valeur de la deuxième consigne de pression, P2 est la valeur de la deuxième pression moyenne d'alimentation, et Cp3 est la valeur de la troisième consigne de pression. L'écart d'effort de presse des actionneurs sur un même frein est réduit lorsque la valeur de la troisième consigne de pression est établie à une valeur correspondant à la moyenne arithmétique de la première pression moyenne d'alimentation et la deuxième pression moyenne d'alimentation.

Le risque de dépassement du couple de freinage consigne est le plus limité lorsque la valeur de la troisième consigne de pression est établie à une valeur correspondant à la plus petite valeur parmi la première pression moyenne d'alimentation et la deuxième pression moyenne d'alimentation.

La consigne de couple de freinage est atteinte plus rapidement lorsque la valeur de la troisième consigne de pression est établie à une valeur correspondant à la plus grande valeur parmi la première pression moyenne d'alimentation et la deuxième pression moyenne d'alimentation.

Avantageusement, à l'issue de l'étape de définir une première consigne de pression, une deuxième consigne de pression et une troisième consigne de pression et avant l'étape d'appliquer la première consigne de pression à la première servovalve, la deuxième consigne de pression à la deuxième servovalve et la troisième consigne de pression à la troisième servovalve, le procédé comprend les étapes supplémentaires suivantes :

- comparer la valeur de la première consigne de pression à un premier seuil haut ;
- comparer la valeur de la deuxième consigne de pression à un deuxième seuil haut ;
- lorsque la valeur de la première consigne de pression est supérieure ou égale au premier seuil haut et, lorsque la valeur de la deuxième consigne de pression est supérieure ou égale au deuxième seuil haut :
- établir la valeur de la première consigne de pression au premier seuil haut ;
- établir la valeur de la deuxième consigne de pression au deuxième seuil haut ; et
- établir la valeur de la troisième consigne de pression à un troisième seuil haut.

Avantageusement encore, à l'issue de l'étape de définir une première consigne de pression, une deuxième consigne de pression et une troisième consigne de pression et avant l'étape d'appliquer la première consigne de pression à la première servovalve, la deuxième consigne de pression à la deuxième servovalve et la troisième consigne de pression à la troisième servovalve, le procédé comprend les étapes supplémentaires suivantes :

- lorsque la valeur de la première consigne de pression est supérieure ou égale au premier seuil haut, et lorsque la valeur de la deuxième consigne de pression est inférieure au deuxième seuil haut :
- établir la valeur de la première consigne de pression au premier seuil haut ;
- établir la valeur de la troisième consigne de pression à une valeur égale à :

$$Cp3 = |2*P1 - Cp1|$$

Où Cp3 est la valeur de la troisième consigne de pression, P1 est la valeur de la première pression moyenne d'alimentation, et Cp1 est la valeur de la première consigne de pression ; et
- établir la valeur de la deuxième consigne de pression à une valeur égale à :

$$Cp2 = |2*P2 - Cp3|$$

Où Cp2 est la valeur de la deuxième consigne de pression, P2 est la valeur de la deuxième pression moyenne d'alimentation, et Cp3 est la valeur de la troisième consigne de pression.

Selon un mode de réalisation préféré, à l'issue de l'étape de définir une première consigne de pression, une deuxième consigne de pression et une troisième consigne de pression et avant l'étape d'appliquer la première consigne de pression à la première servovalve, la deuxième consigne de pression à la deuxième servovalve et la troisième consigne de pression à la troisième servovalve, le procédé comprend les étapes supplémentaires suivantes :

- comparer la valeur de la première consigne de pression avec un premier seuil bas ;
- comparer la valeur de la deuxième consigne de pression avec un deuxième seuil bas ;
- lorsque la valeur de la première consigne de pression est inférieure ou égale au premier seuil bas, et lorsque la valeur de la deuxième consigne de pression est inférieure ou égale au deuxième seuil bas :
- établir la valeur de la première consigne de pression au premier seuil bas ;
- établir la valeur de la deuxième consigne de pression au deuxième seuil bas ; et
- établir la valeur de la troisième consigne de pression à un troisième seuil bas.

Avantageusement encore, à l'issue de l'étape de définir une première consigne de pression, une deuxième consigne de pression et une troisième consigne de pression et avant l'étape d'appliquer la première consigne de pression à la première servovalve, la deuxième consigne de pression à la deuxième servovalve et la troisième consigne de pression à la troisième servovalve, le procédé comprend les étapes supplémentaires suivantes :

- lorsque la valeur de la première consigne de pression est inférieure ou égale à un premier seuil bas, et lorsque la valeur de la deuxième consigne d'alimentation est supérieure à un deuxième seuil bas :
- établir la valeur de la première consigne de pression au premier seuil bas ;
- établir la valeur de la troisième consigne de pression à une valeur égale à :

$$Cp3 = |2*P1 - Cp1|$$

Où Cp3 est la valeur de la troisième consigne de pression, P1 est la valeur de la première pression moyenne d'alimentation, et Cp1 est la valeur de la première consigne de pression. ; et
- établir la valeur de la deuxième consigne de pression à une valeur égale à :

$$Cp2 = |2*P2 - Cp3|$$

Où Cp2 est la valeur de la deuxième consigne de pression, P2 est la valeur de la deuxième pression moyenne d'alimentation, et Cp3 est la valeur de la troisième consigne de pression. Le freinage est plus précis lorsque le procédé comprend les étapes supplémentaires suivantes :

- mesurer une troisième valeur représentative de la première pression ;
- définir une première commande à appliquer à la première servovalve en fonction de la troisième valeur et de la première consigne de pression à l'aide d'une troisième boucle d'asservissement ;
- mesurer une quatrième valeur représentative de la deuxième pression ;
- définir une deuxième commande à appliquer à la deuxième servovalve en fonction de la quatrième valeur et de la deuxième consigne de pression à l'aide d'une quatrième boucle d'asservissement ;
- mesurer une cinquième valeur représentative de la troisième pression ;
- définir une troisième commande à appliquer à la deuxième servovalve en fonction de la cinquième valeur et de la cinquième valeur et de la troisième consigne de pression à l'aide d'une cinquième boucle d'asservissement.

L'invention concerne également un dispositif de freinage hydraulique comprenant une première servovalve, une deuxième servovalve, une troisième servovalve, un premier frein d'une première roue comprenant un premier actionneur de freinage et un deuxième actionneur de freinage, un deuxième frein d'une deuxième roue comprenant un deuxième actionneur de freinage. La première servovalve est agencée pour délivrer une première pression au premier actionneur, la deuxième servovalve est agencée pour délivrer une deuxième pression au troisième actionneur, et la troisième servovalve est agencée pour délivrer une troisième pression au deuxième actionneur et au quatrième actionneur.

Le dispositif comprend également un premier capteur de couple de freinage disposé sur le premier frein pour fournir une première mesure d'un premier couple de freinage appliqué par le premier frein sur la première roue et un deuxième capteur de couple de freinage disposé sur le deuxième frein pour fournir une deuxième mesure d'un deuxième couple de freinage appliqué par le deuxième frein sur la deuxième roue. Le dispositif comprend une unité de commande reliée à la première servovalve, la deuxième servovalve, la troisième servovalve, au premier capteur de couple et au deuxième capteur de couple. Une interface de commande de freinage est agencée pour délivrer une instruction de couple de freinage à l'unité de commande. Selon l'invention, l'unité de commande est agencée pour mettre en œuvre le procédé décrit ci-dessus. Avantageusement, le dispositif de freinage comprend un premier capteur de pression disposé sur une première sortie de la première servovalve pour fournir une première mesure d'une première pression d'un fluide en sortie de la première servovalve, un deuxième capteur de pression disposé sur une deuxième sortie de la deuxième servovalve pour fournir une deuxième mesure d'une deuxième pression d'un fluide en sortie de la deuxième servovalve et un troisième capteur de pression disposé sur une troisième sortie de la troisième servovalve pour fournir une troisième mesure d'une troisième pression d'un fluide en sortie de la troisième servovalve. L'invention concerne également un aéronef comprenant un tel dispositif de freinage.

L'invention telle que définie ci-dessus permet d'envisager une évolution des systèmes de freinage existants de façon à contrôler et limiter le couple activement pour réduire les efforts qui s'exercent sur la structure du train d'atterrissage lors du freinage. En effet, les efforts de freinage sont l'un des critères de dimensionnement des pièces de structure d'un train d'atterrissage équipé de roues freinées. L'invention permet alors un gain significatif sur le dimensionnement et la masse des pièces structurales. L'invention permet également un freinage plus homogène d'une roue à l'autre (même couple, donc même effort généré par chaque frein) ce qui présente plusieurs avantages :

    o éviter la surchauffe d'un frein par rapport aux autres et réduire le temps entre deux vols (meilleur dispatch) ;
    o meilleur confort pour les passagers et amélioration des sensations du pilote ;
    o meilleure estimation de l'état de la piste ce qui permet d'avoir de meilleurs performances de l'antiskid.

D'autres caractéristiques et avantages de l'invention apparaîtront à la lecture de la description qui suit de modes de mise en œuvre particuliers non limitatifs de l'invention.

BREVE DESCRIPTION DES DESSINS

Il sera fait référence aux figures annexées parmi lesquelles.

[Fig. 1] la figure 1 est une représentation schématique d'un aéronef pourvu d'un dispositif selon un premier mode de réalisation de l'invention ;
[Fig. 2] la figure 2 est un logigramme détaillant les étapes du premier mode de réalisation du procédé de l'invention ;
[Fig. 3] la figure 3 est un logigramme détaillant les étapes d'un deuxième mode de réalisation du procédé de l'invention ;
[Fig. 4] la figure 4 est une représentation schématique d'un aéronef pourvu d'un dispositif selon un deuxième mode de réalisation de l'invention ;
[Fig. 5] la figure 5 est un logigramme détaillant les étapes d'un troisième mode de réalisation du procédé de l'invention.

DESCRIPTION DETAILLEE DE L'INVENTION

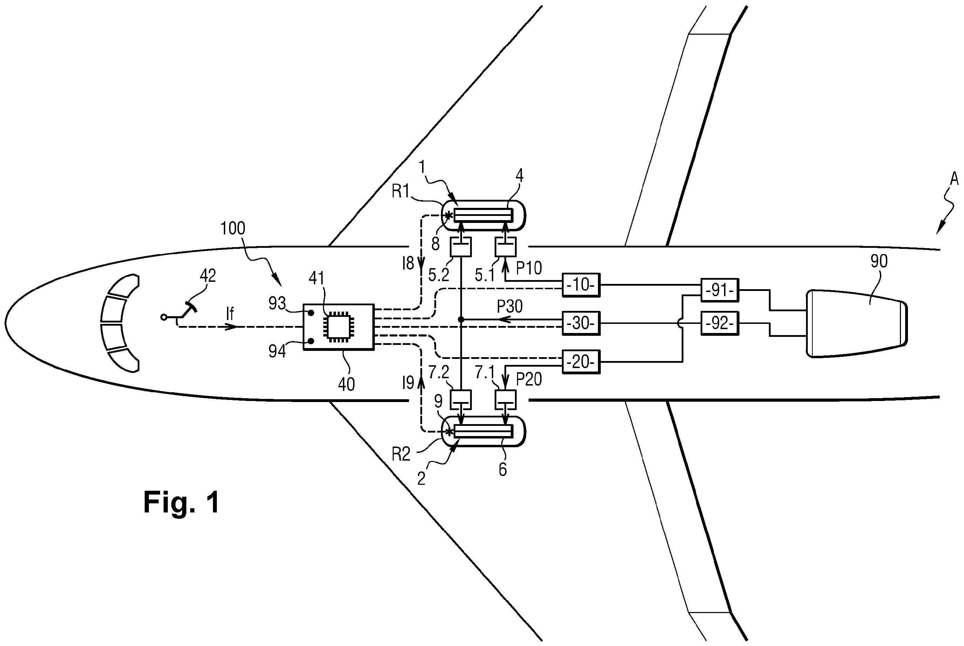

En référence à la figure 1, le dispositif de freinage hydraulique selon l'invention, généralement désigné 1, est monté dans un aéronef A comprenant un train d'atterrissage qui comporte une première roue R1 et une deuxième roue R2. L'aéronef A comprend en outre une turbine 90 reliée à un des moteurs de l'aéronef A.

Le dispositif 100 comprend une première servovalve 10, une deuxième servovalve 20 et une troisième servovalve 30 pilotées électriquement. Le dispositif 100 comprend également un premier frein 1 de la première roue R1 et un deuxième frein 2 de la deuxième roue R2. Le premier frein 1 comprend une première pile 4 de disques de freinage que vient presser un premier actionneur de freinage 5.1 et un deuxième actionneur de freinage 5.2 d'une manière connue de l'homme du métier. Le deuxième frein 2 comprend une deuxième pile 6 de disques de freinage que vient presser un troisième actionneur de freinage 7.1 et un quatrième actionneur de freinage 7.2 d'une manière connue de l'homme du métier.

La turbine 90 entraîne un premier groupe hydraulique 91 et un deuxième groupe hydraulique 92. La première servovalve 10 est alimentée par le premier groupe hydraulique 91 et a une sortie reliée au premier actionneur 5.1 pour lui délivrer un fluide à une première pression P10. La deuxième servovalve 20 est alimentée par le premier groupe hydraulique 91 et a une sortie reliée au troisième actionneur 7.1 pour lui délivrer un fluide à une deuxième pression P20. La troisième servovalve 30 est alimentée par le deuxième groupe hydraulique 92 et a des sorties reliées respectivement au deuxième actionneur 5.2 et au quatrième actionneur 7.2 pour délivrer à ceux-ci un fluide à une troisième pression P30. Le dispositif 100 comprend également un premier capteur 8 de couple de freinage disposé sur le premier frein 1 pour fournir une première mesure (ici une première intensité I8) représentative d'un premier couple de freinage C1 appliqué par le premier frein 1 sur la première roue R1. Un deuxième capteur 9 de couple de freinage est disposé sur le deuxième frein 2 pour fournir une deuxième mesure (ici une deuxième intensité I9) d'un deuxième couple de freinage C2 appliqué par le deuxième frein 2 sur la deuxième roue R2.

Une unité de commande 40, comprenant de façon connue en elle-même un microprocesseur 41, est reliée à la première servovalve 10, à la deuxième servovalve 20, à la troisième servovalve 30, au premier capteur 8 ainsi qu'au deuxième capteur 9.

Le dispositif 100 comprend également une pédale de frein 42 qui est actionnable par un pilote de l'aéronef A et qui délivre une instruction If de couple de freinage à l'unité de commande 40.

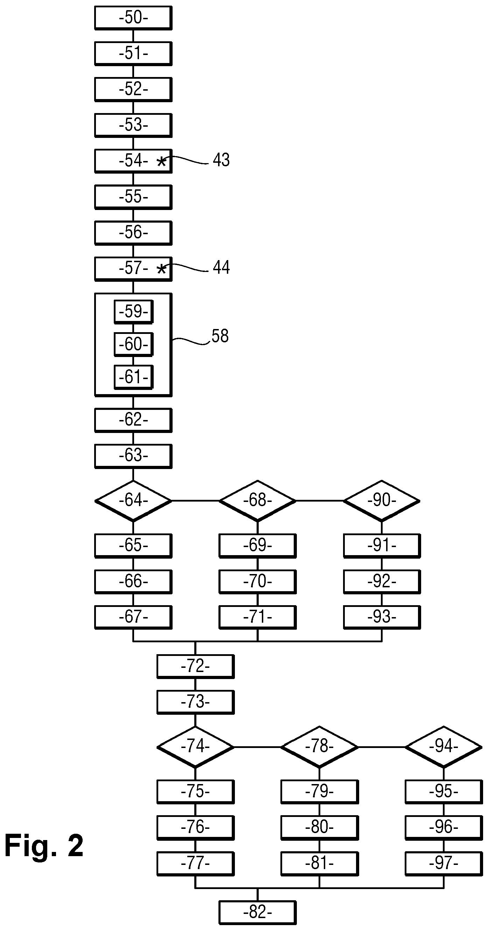

En référence à la figure 2, les étapes du procédé de pilotage du dispositif 100 mis en œuvre par l'unité de commande 40 vont être décrites.

Selon une étape 50, le pilote de l'aéronef A agit sur la pédale de frein 42 et l'unité de commande 40 reçoit une instruction If de couple de freinage correspondant à l'enfoncement de la pédale de frein 42. Selon une deuxième étape 51, l'unité de commande 40, sur la base de l'instruction If de couple de freinage, établit une première consigne de couple de freinage Cf1 pour le premier frein 1 et une deuxième consigne de couple de freinage Cf2 pour le deuxième frein 2. A des fins d'illustration, la première consigne de couple de freinage Cf1 et la deuxième consigne de couple de freinage Cf2 sont, ici, toutes deux égales à 3500 decaNewton mètre.

Selon une étape 52, l'unité de commande 40 mesure la première intensité I8 fournie par le premier capteur de couple 8 et convertit cette première intensité I8 en une valeur de premier couple de freinage appliqué C1app par le premier frein 1 à la première roue R1. Selon une étape 53, l'unité de commande 40 détermine ensuite une première erreur de couple $\varepsilon_1$ qu'il existe entre la première consigne de freinage Cf1 et le premier couple de freinage appliqué C1app. Selon une étape 54, sur la base de l'erreur de couple $\varepsilon_1$ calculée et en utilisant une caractéristique liant la valeur du premier couple de freinage appliqué C1app et la première pression moyenne d'alimentation P1 du premier frein 1, l'unité 40 définit une première pression moyenne d'alimentation P1 à appliquer au premier frein 1 pour obtenir un premier couple de freinage appliqué C1app égal à la première consigne de couple Cf1 à l'aide d'une première boucle d'asservissement 43 connue en elle-même. Ici, la première boucle d'asservissement 93 comprend un régulateur PID. Cette première pression moyenne d'alimentation P1 est ici, égale à 100 000 hectopascals. La pression moyenne d'alimentation est déterminée de manière connue en elle-même par l'homme du métier. Les valeurs numériques ne sont données qu'à titre indicatif.

Selon une étape 55, l'unité de commande mesure la deuxième intensité I9 fournie par le deuxième capteur de couple 9, convertit cette deuxième intensité I9 en une valeur de deuxième couple de freinage appliqué C2app par le deuxième frein 2 à la deuxième roue R2. Selon une étape 56, l'unité de commande 40 détermine ensuite une deuxième erreur de couple $\varepsilon_2$ qu'il existe entre la deuxième consigne de freinage Cf2 et le deuxième couple de freinage appliqué C2app. Selon une étape 57, sur la base de la deuxième erreur de couple $\varepsilon_2$ calculée et en utilisant une caractéristique liant la valeur du deuxième couple de freinage appliqué C2app et la deuxième pression moyenne d'alimentation P2 du deuxième frein 2, l'unité 40 définit une deuxième pression moyenne d'alimentation P2 à appliquer au deuxième frein 2 pour obtenir un deuxième couple de freinage appliqué C2app égal à la deuxième consigne de couple Cf2 à l'aide d'une deuxième boucle d'asservissement 94 connue en elle-même. Ici, la deuxième boucle d'asservissement 44 comprend un régulateur PID. Cette deuxième pression moyenne d'alimentation P2 est ici, égale à 150 000 hectopascals.

Selon une étape 58, l'unité de commande 40 définit - sur la base de la première pression moyenne d'alimentation P1 et la deuxième pression moyenne d'alimentation P2 - une première consigne de pression Cp1, une deuxième consigne de pression Cp2 et une troisième consigne de pression Cp3.

L'étape 58 comprend plusieurs opérations. Selon un premier mode de réalisation, l'unité de commande 40, au cours d'une première opération 59, établit la valeur de la troisième consigne de pression Cp3 à une valeur égale à la moyenne arithmétique de la première pression moyenne d'alimentation P1 et la deuxième pression moyenne d'alimentation P2, soit 125 000 hectopascals.

Au cours d'une deuxième opération 60, l'unité de commande 40 établit la valeur de la première consigne de pression Cp1 à une valeur égale à :

[Math 1]

$$Cp1 = |2*P1 - Cp3|$$

Où Cp1 est la valeur de la première consigne de pression, P1 est la valeur de la première pression moyenne d'alimentation et Cp3 est la valeur de la troisième consigne de pression. Ainsi, la première consigne de pression Cp1 est égale à 75000 hectopascals.

Au cours d'une troisième opération 61, l'unité de commande 40 établit la valeur de la deuxième consigne de pression Cp2 à une valeur égale à :

[Math 2]

$$Cp2 = |2*P2 - Cp3|$$

Où Cp2 est la valeur de la deuxième consigne de pression, P2 est la valeur de la deuxième pression moyenne d'alimentation et Cp3 est la valeur de la troisième consigne de pression. Ainsi, la deuxième consigne de pression Cp2 est égale à 175 000 hectopascals.

Selon une étape 62, l'unité de commande 40 compare la valeur de la première consigne de pression Cp1 avec un premier seuil haut Pmax10 -ici égal à 200 000 hectopascals- et qui correspond à la première pression de sortie maximale que peut délivrer la première servovalve 10.

Selon une étape 63, l'unité de commande 40 compare la valeur de la deuxième consigne de pression Cp2 avec un deuxième seuil haut Pmax20 -ici égal à 200 000 hectopascals- qui correspond à la deuxième pression de sortie maximale que peut délivrer la deuxième servovalve 20. L'unité de commande 40 applique alors les étapes conditionnelles suivantes. Selon une étape 64, lorsque la valeur de la première consigne de pression Cp1 est supérieure ou égale au premier seuil haut Pmax10, et lorsque la valeur de la deuxième consigne de pression Cp2 est supérieure ou égale au deuxième seuil haut Pmax20, l'unité de commande 40 réalise les opérations suivantes :

- établir la valeur de la première consigne de pression Cp1 à la valeur du premier seuil haut Pmax10 (opération 65) ;
- établir la valeur de la deuxième consigne de pression Cp2 à la valeur du deuxième seuil haut Pmax20 (opération 66) ; et
- établir la valeur de la troisième consigne de pression Cp3 à un troisième seuil haut Pmax30, qui correspond à la troisième pression de sortie maximale que peut délivrer la troisième servovalve 30 (opération 67).

Selon une étape 68, lorsque la valeur de la première consigne de pression Cp1 est supérieure ou égale au premier seuil haut Pmax10, et lorsque la valeur de la deuxième consigne de pression Cp2 est inférieure au deuxième seuil haut Pmax20, l'unité de commande 40 réalise les opérations suivantes :

- établir la valeur de la première consigne de pression Cp1 au premier seuil haut Pmax10 (opération 69) ;
- établir la valeur de la troisième consigne de pression Cp3 à une valeur égale à :

[Math 3]

$$Cp3 = |2*P1 - Cp1|$$

Où Cp3 est la valeur de la troisième consigne de pression, P1 est la valeur de la première pression moyenne d'alimentation, et Cp1 est la valeur de la première consigne de pression (opération 70) ; et
- établir la valeur de la deuxième consigne de pression Cp2 à une valeur égale à :

[Math 4]

$$Cp2 = |2*P2 - Cp3|$$

Où Cp2 est la valeur de la deuxième consigne de pression, P2 est la valeur de la deuxième pression moyenne d'alimentation, et Cp3 est la valeur de la troisième consigne de pression (opération 71).

Selon une étape 90, lorsque la valeur de la première consigne de pression Cp1 est inférieure au premier seuil haut Pmax10, et lorsque la valeur de la deuxième consigne de pression Cp2 est supérieure ou égale au deuxième seuil haut Pmax20, l'unité de commande 40 réalise les opérations suivantes :

- établir la valeur de la deuxième consigne de pression Cp2 au deuxième seuil haut Pmax20 (opération 91) ;
- établir la valeur de la troisième consigne de pression Cp3 à une valeur égale à :

[Math 5]

$$Cp3 = |2*P2 - Cp2|$$

Où Cp3 est la valeur de la troisième consigne de pression, P2 est la valeur de la deuxième pression moyenne d'alimentation, et Cp2 est la valeur de la deuxième consigne de pression (opération 92) ; et

- établir la valeur de la première consigne de pression Cp1 à une valeur égale à :

[Math 6]

$$Cp1 = |2*P1 - Cp3|$$

Où Cp1 est la valeur de la première consigne de pression, P1 est la valeur de la première pression moyenne d'alimentation, et Cp3 est la valeur de la troisième consigne de pression (opération 93).

Selon une étape 72, l'unité de commande 40 compare la valeur de la première consigne de pression Cp1 avec un premier seuil bas Pmin10 -ici égal à 0 hectopascal- et qui correspond à la première pression de sortie minimale que peut délivrer la première servovalve 10.

Selon une étape 73, l'unité de commande 40 compare la valeur de la deuxième consigne de pression Cp2 avec un deuxième seuil bas Pmin20 -ici égal à 0 hectopascal- et qui correspond à la deuxième pression de sortie minimale que peut délivrer la deuxième servovalve 20.

Selon une étape 74, lorsque la valeur de la première consigne de pression CP1 est inférieure ou égale au premier seuil bas Pmin10, et lorsque la valeur de la deuxième consigne de pression CP2 est inférieure ou égale au deuxième seuil bas Pmin20, l'unité de commande 40 réalise les opérations suivantes :

- établir la valeur de la première consigne de pression Cp1 au premier seuil bas Pmin10 (opération 75) ;
- établir la valeur de la deuxième consigne de pression Cp2 au deuxième seuil bas Pmin20 (opération 76) ; et
- établir la valeur de la troisième consigne de pression Cp3 à un troisième seuil bas Pmin30, qui correspond à la troisième pression de sortie minimale que peut délivrer la troisième servovalve 30 (opération 77).

Selon une étape 78, lorsque la valeur de la première consigne de pression Cp1 est inférieure ou égale au premier seuil bas Pmin10, et lorsque la valeur de la deuxième consigne de pression Cp2 est supérieure au deuxième seuil bas Pmin20, l'unité de commande 40 réalise les opérations suivantes :

- établir la valeur de la première consigne de pression Cp1 au premier seuil bas Pmin10 (opération 79) ;
- établir la valeur de la troisième consigne de pression Cp3 à une valeur égale à :

[Math 7]

$$Cp3 = |2*P1 - Cp1|$$

Où Cp3 est la valeur de la troisième consigne de pression, P1 est la valeur de la première pression moyenne d'alimentation, et Cp1 est la valeur de la première consigne de pression (opération 80) ; et

- établir la valeur de la deuxième consigne de pression Cp2 à une valeur égale à :

[Math 8]

$$Cp2 = |2*P2 - Cp3|$$

Où Cp2 est la valeur de la deuxième consigne de pression, P2 est la valeur de la deuxième pression moyenne d'alimentation, et Cp3 est la valeur de la troisième consigne de pression (opération 81).

Selon une étape 94, lorsque la valeur de la première consigne de pression Cp1 est supérieure au premier seuil bas Pmin10, et lorsque la valeur de la deuxième consigne de pression Cp2 est inférieure ou égale au deuxième seuil bas Pmin20, l'unité de commande 40 réalise les opérations suivantes :

- établir la valeur de la deuxième consigne de pression Cp2 au deuxième seuil bas Pmin20 (opération 95) ;
- établir la valeur de la troisième consigne de pression Cp3 à une valeur égale à :

[Math 9]

$$Cp3 = |2*P2 - Cp2|$$

Où Cp3 est la valeur de la troisième consigne de pression, P2 est la valeur de la deuxième pression moyenne d'alimentation, et Cp2 est la valeur de la deuxième consigne de pression ; et
- établir la valeur de la première consigne de pression Cp1 à une valeur égale à :

[Math 10]

$$Cp1 = |2*P1 - Cp3|$$

Où Cp1 est la valeur de la première consigne de pression, P1 est la valeur de la première pression moyenne d'alimentation, et Cp3 est la valeur de la troisième consigne de pression (opération 97).

Selon une étape 82, l'unité de commande 40 applique la première consigne de pression Cp1 à la première servovalve 10, la deuxième consigne de pression Cp2 à la deuxième servovalve 20 et la troisième consigne de pression Cp3 à la troisième servovalve 30.

Les éléments identiques ou analogues à ceux précédemment décrits porteront une référence numérique identique à ceux-ci dans la description qui suit des deuxième et troisième modes de réalisation de l'invention, ainsi que d'un quatrième et un cinquième mode de réalisation de l'invention.

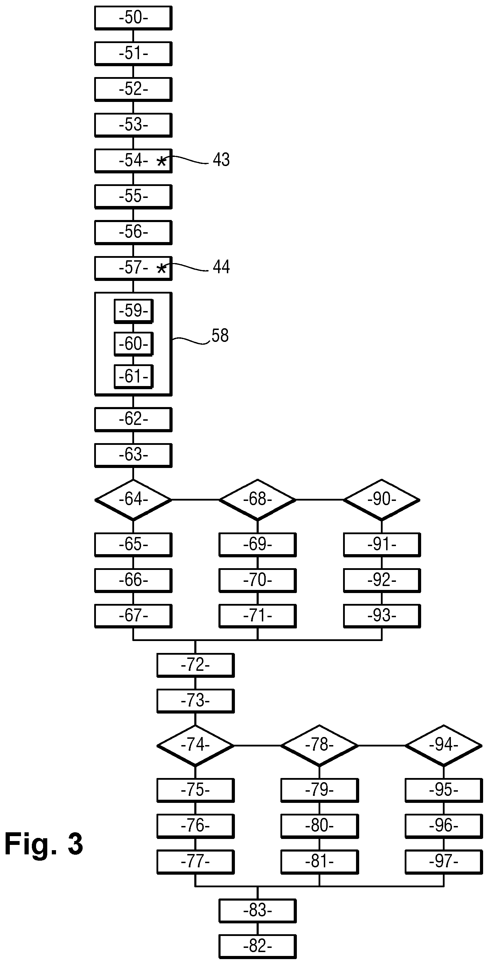

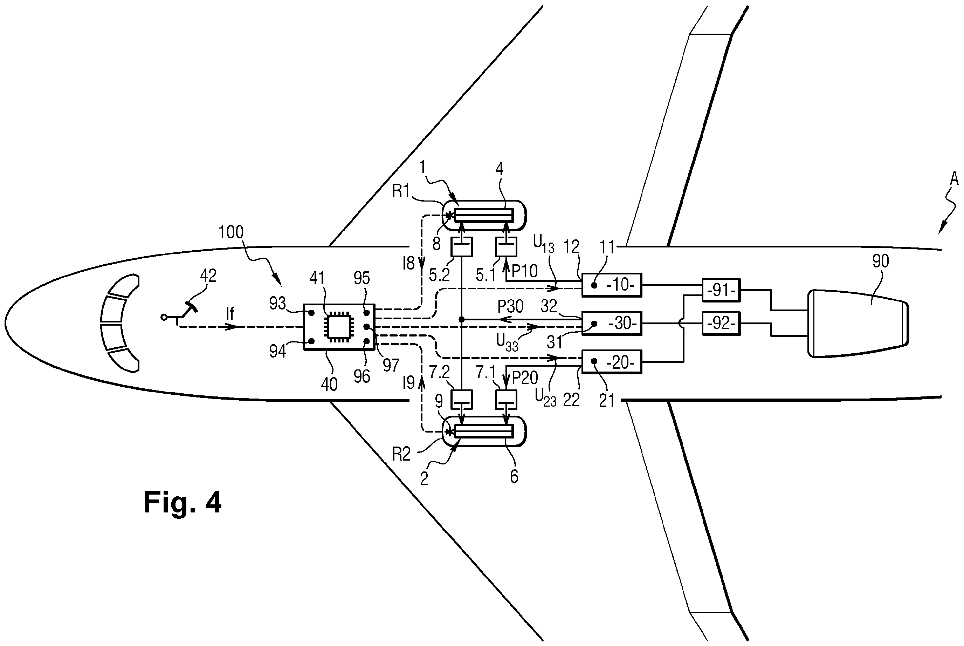

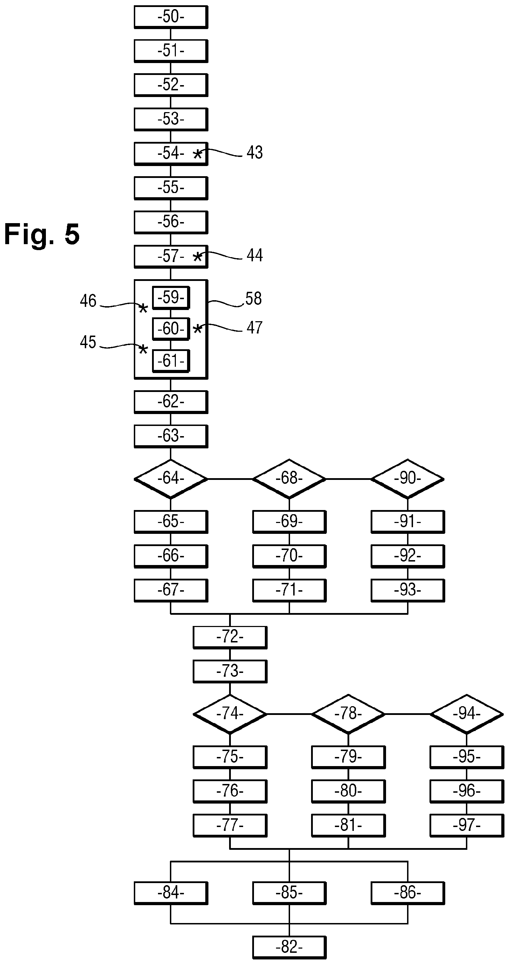

Selon un deuxième mode de réalisation et en référence à la figure 3, l'unité de commande 40 surveille l'évolution de la première consigne de pression Cp1, de la deuxième consigne de pression Cp2 et de la troisième consigne de pression Cp3 et limite, selon une étape 83 située entre les étapes 73/77/97 et l'étape 82, la vitesse d'augmentation de la première consigne de pression Cp1, de la deuxième consigne de pression Cp2 et de la troisième consigne de pression Cp3 de manière à ce que la vitesse d'augmentation des consignes de pression reste en deçà de 100 000 hectopascal par seconde. Selon un troisième mode de réalisation et en référence aux figures 4 et 5, le dispositif 100 comprend également un premier capteur de pression 11 disposé sur la sortie 12 de la première servovalve 10 pour fournir une première mesure de la première pression P10 en sortie de la première servovalve 10. Le dispositif 100 comprend également un deuxième capteur de pression 21 disposé sur la sortie 22 de la deuxième servovalve 20 pour fournir une deuxième mesure de la deuxième pression P20 en sortie de la deuxième servovalve 20. Enfin, le dispositif 100 comprend également un troisième capteur de pression 31 disposé sur la sortie 32 de la troisième servovalve 30 pour fournir une troisième mesure de la troisième pression P30 en sortie de la troisième servovalve 30.

Selon une étape 84 située après les étapes 77/81 et avant l'étape 82, l'unité de commande 40 mesure une troisième intensité I11 fournie par le premier capteur de pression 11, convertit cette troisième intensité I11 en une valeur de première pression P10 et définit une valeur d'une première commande -ici une première tension U13- à appliquer à la première servovalve 10 en fonction de la valeur de la troisième intensité I11 et de la première consigne de pression Cp1 à l'aide d'une troisième boucle d'asservissement connue en elle-même. Ici, la troisième boucle d'asservissement comprend un régulateur PID.

Selon une étape 85 située après les étapes 77/81 et avant l'étape 82, l'unité de commande 40 mesure une quatrième intensité I21 fournie par le deuxième capteur de pression 21, convertit cette quatrième intensité I21 en une valeur de deuxième pression P20 et définit une valeur d'une deuxième commande -ici une deuxième tension U23- à appliquer à la deuxième servovalve 20 en fonction de la quatrième intensité I21 et de la deuxième consigne de pression Cp2 à l'aide d'une quatrième boucle d'asservissement connue en elle-même. Ici, la quatrième boucle d'asservissement comprend un régulateur PID.

Selon une étape 86 située après les étapes 77/81 et avant l'étape 82 , l'unité de commande 40 mesure une cinquième intensité I31 fournie par le troisième capteur de pression 31, convertit cette cinquième intensité I31 en une valeur de troisième pression P30 et définit une valeur d'une troisième commande -ici une troisième tension U23- à appliquer à la deuxième servovalve 20 en fonction de la valeur de cinquième intensité I31 et de la troisième consigne de pression Cp3 à l'aide d'une cinquième boucle d'asservissement 47 connue en elle-même. Ici, la cinquième boucle d'asservissement 47 comprend un régulateur PID.

Selon un quatrième mode de réalisation, l'opération 55 d'établir la valeur de la troisième consigne de pression Cp3 est réalisée en établissant la troisième consigne de pression Cp3 à une valeur correspondant à la plus petite valeur parmi la première pression d'alimentation P1 et la deuxième pression d'alimentation P2.

Selon un cinquième mode de réalisation, l'opération 55 d'établir la valeur de la troisième consigne de pression Cp3 est réalisée en établissant la troisième consigne de pression Cp3 à une valeur correspondant à la plus grande valeur parmi la première pression d'alimentation P1 et la deuxième pression d'alimentation P2.

Bien évidemment, l'invention n'est pas limitée aux modes de réalisation décrits mais englobe toute variante entrant dans le champ de l'invention telle que définie par les revendications.

En particulier,

- bien qu'ici, la troisième consigne de pression soit établie soit comme une moyenne arithmétique des première et deuxième pressions d'alimentation, soit comme correspondant à la plus élevée ou la plus faible des première et deuxième pressions d'alimentation, l'invention s'applique également à un procédé au cours duquel la troisième consigne d'alimentation est établie selon l'un puis l'autre des critères. Par exemple, la troisième consigne de pression peut être établie comme correspondant à la moyenne des pressions d'alimentation puis, au cours d'un même cycle d'utilisation, elle est établie à un des extremums des première et deuxième pressions d'alimentation en fonction de la valeur de ces dernières et/ou de leur proximité d'un des extremums (minimum ou maximum) admissibles pour la première et la deuxième pression ;
- bien qu'ici le dispositif soit alimenté par des groupes hydrauliques distincts entraînés par une turbine, l'invention s'applique également à d'autres moyens d'entrainer les groupes hydrauliques comme par exemple un moteur à explosion ou un moteur électrique ;
- bien qu'ici le dispositif soit alimenté par deux groupes hydrauliques distincts, l'invention s'applique également à un dispositif alimenté par un unique groupe hydraulique ou plus de deux, comme par exemple un groupe hydraulique par servovalve ;
- bien qu'ici les capteurs de couple de freinage fournissent une intensité représentative du couple de freinage appliqué par le frein à la roue, l'invention s'applique également à d'autres types de capteurs fournissant un autre type de valeur pour un paramètre représentatif d'un couple de freinage comme par exemple une tension, une résistance, une inductance, une impédance complexe, une capacité ;
- bien qu'ici le dispositif comprenne une pédale de frein, l'invention s'applique également à d'autres types d'interfaces de commande comme par exemple un joystick de commande ou un dispositif de régulation automatique de freinage ;
- bien qu'ici les consignes de couple de freinage soient égales, l'invention s'applique également à d'autres valeurs de consignes de couple de freinage comme par exemple des valeurs différentes ;
- bien qu'ici le seuil haut corresponde à la pression maximale que peut délivrer la servovalve, l'invention s'applique également à d'autres valeurs de seuil haut comme par exemple la pression maximale que peut délivrer la servovalve pondérée d'un coefficient de sécurité ou une valeur maximale prédéfinie ;
- bien qu'ici le seuil bas corresponde à la pression minimale que peut délivrer la servovalve, l'invention s'applique également à d'autres valeurs de seuil bas comme par exemple la pression minimale que peut délivrer la servovalve pondérée d'un coefficient de sécurité ou une valeur minimale prédéfinie ;
- bien qu'ici la boucle d'asservissement comprenne un régulateur PID, l'invention s'applique également à d'autres types de boucles d'asservissement comme par exemple une boucle d'asservissement dépourvue de régulateur, ou pourvue d'un régulateur simple proportionnel et/ou intégrateur et/ou dérivé ;
- bien qu'ici la vitesse d'augmentation de la consigne de pression soit surveillée et limitée sur l'ensemble des consignes de pression, l'invention s'applique également à une limitation d'une seule ou deux consignes de pression, ou à une absence de limitation ;
- bien qu'ici la vitesse d'augmentation de la consigne de pression soit limitée à 100 000 hectopascal par seconde, l'invention s'applique également à d'autres valeurs de vitesse maximale d'augmentation de consigne de pression comme par exemple une valeur inférieure ou supérieure à 100 000 hectopascal par seconde ;
- bien qu'ici l'unité de commande convertisse les intensités en provenance des capteurs en pression ou couple de freinage, l'invention s'applique également à d'autres types de traitement des paramètres représentatifs de la pression ou du couple de freinage comme par exemple un traitement dépourvu de conversion et qui gère directement les grandeurs électriques ;

- bien qu'ici le dispositif ait été décrit en lien avec le freinage de deux roues, l'invention s'applique également au freinage d'un nombre de roues supérieur à deux ;
- bien qu'ici le dispositif ait été décrit en lien avec un frein comprenant deux actionneurs de freinage, l'invention s'applique également à d'autres types de freins comme par exemple un frein comprenant plus de deux actionneurs de freinage ;
- bien qu'ici les servovalves soient commandées à l'aide d'une tension électrique, l'invention s'applique également à d'autres types de première, deuxième, et troisième commande comme par exemple une intensité, une pression hydraulique ou pneumatique ;
- bien qu'ici les pressions moyennes soient établies à l'aide d'une caractéristique liant la valeur du couple de freinage appliqué sur une roue et la pression moyenne, l'invention s'applique également à d'autre moyens d'établir une pression moyenne comme par exemple une équation mathématique, une interpolation linéaire ou non réalisée à l'aide de points de mesures.

**Revendications**

1. Procédé de pilotage d'un dispositif de freinage (100) hydraulique, le dispositif de freinage (100) comprenant

   - une première servovalve (10), une deuxième servovalve (20), une troisième servovalve (30) ;
   - un premier frein (1) d'une première roue (R1) comprenant au moins un premier actionneur de freinage (5.1) et un deuxième actionneur de freinage (5.2) pour appliquer un premier couple de freinage (C1) sur la première roue (R1) ;
   - un deuxième frein (2) d'une deuxième roue (R2) comprenant au moins un troisième actionneur de freinage (7.1) et un quatrième actionneur de freinage (7.2) pour appliquer un deuxième couple de freinage (C2) sur la deuxième roue (R2) ;

   dans lequel la première servovalve (10) est agencée pour délivrer une première pression (P10) au premier actionneur (5.1), la deuxième servovalve (20) est agencée pour délivrer une deuxième pression (P20) au troisième actionneur (7.1), la troisième servovalve (30) est agencée pour délivrer une troisième pression (P30) au deuxième actionneur (5.2) et au quatrième actionneur (7.2) ;
   le procédé comprenant les étapes suivantes :

   - recevoir une instruction (If) de couple de freinage ;
   - sur la base de l'instruction (If) de couple de freinage reçu, établir une première consigne de couple de freinage (Cf1) pour le premier frein (1) et une deuxième consigne de couple de freinage (Cf2) pour le deuxième frein (2) ;
   - mesurer une première valeur d'un premier paramètre (I8) représentatif du premier couple de freinage (C1) ;
   - définir une première pression moyenne d'alimentation (P1) à appliquer sur le premier frein (1) en fonction de la première valeur du premier paramètre et de la première consigne de freinage (Cf1) à l'aide d'une première boucle d'asservissement (93) ;
   - mesurer une deuxième valeur d'un deuxième paramètre (I9) représentatif du deuxième couple de freinage (C2) ;
   - définir une deuxième pression moyenne d'alimentation (P2) à appliquer sur le deuxième frein (2) en fonction de la deuxième valeur du deuxième paramètre et de la deuxième consigne de freinage (Cf2) à l'aide d'une deuxième boucle d'asservissement (94) ;
   - sur la base de la première pression moyenne d'alimentation (P1) et la deuxième pression moyenne d'alimentation (P2), définir une première consigne de pression (Cp1), une deuxième consigne de pression (Cp2) et une troisième consigne de pression (Cp3) ;
   - appliquer la première consigne de pression (Cp1) à la première servovalve (10), la deuxième consigne de pression (Cp2) à la deuxième servovalve (20) et la troisième consigne de pression (Cp3) à la troisième servovalve (30).

2. Procédé selon la revendication 1, comprenant l'étape supplémentaire de limiter la vitesse d'augmentation de la première consigne de pression (Cp1) et/ou de la deuxième consigne de pression (Cp2) et/ou de la troisième consigne de pression (Cp3).

3. Procédé selon l'une quelconque des revendications précédentes, dans lequel l'étape de définir une première consigne de pression (Cp1), une deuxième consigne de pression (Cp2) et une troisième consigne de pression (Cp3) comprend les opérations suivantes :

- définir une valeur de la première pression moyenne d'alimentation (P1) du premier frein (1) ;
- définir une valeur de la deuxième pression moyenne d'alimentation (P2) du deuxième frein (2) ;
- établir la valeur de la troisième consigne de pression (Cp3) ;
- établir la valeur de la première consigne de pression (Cp1) à une valeur égale à :

$$Cp1 = |2*P1- Cp3 |$$

Où Cp1 est la valeur de la première consigne de pression, P1 est la valeur de la première pression moyenne d'alimentation et Cp3 est la valeur de la troisième consigne de pression ;
- établir la valeur de la deuxième consigne de pression (Cp2) à une valeur égale à :

$$Cp2 = |2*P2- Cp3|$$

Où Cp2 est la valeur de la deuxième consigne de pression, P2 est la valeur de la deuxième pression moyenne d'alimentation et Cp3 est la valeur de la troisième consigne de pression.

4. Procédé selon la revendication 3, dans lequel la valeur de la troisième consigne de pression (Cp3) est établie à une valeur correspondant à la moyenne arithmétique de la première pression moyenne d'alimentation (P1) et la deuxième pression moyenne d'alimentation (P2).

5. Procédé selon la revendication 3, dans lequel la valeur de la troisième consigne de pression (Cp3) est établie à une valeur correspondant à la plus petite valeur parmi la première pression moyenne d'alimentation (P1) et la deuxième pression moyenne d'alimentation (P2).

6. Procédé selon la revendication 3, dans lequel la valeur de la troisième consigne de pression (Cp3) est établie à la plus haute valeur parmi la première pression moyenne d'alimentation (P1) et la deuxième pression moyenne d'alimentation (P2).

7. Procédé selon l'une quelconque des revendications précédentes, dans lequel, à l'issue de l'étape de définir une première consigne de pression (Cp1), une deuxième consigne de pression (Cp2) et une troisième consigne de pression (Cp3) et avant l'étape d'appliquer la première consigne de pression (Cp1) à la première servovalve (10), la deuxième consigne de pression (Cp2) à la deuxième servovalve (20) et la troisième consigne de pression (Cp3) à la troisième servovalve (30), le procédé comprend les étapes supplémentaires suivantes :

- comparer la valeur de la première consigne de pression (Cp1) à un premier seuil haut (Pmax10) ;
- comparer la valeur de la deuxième consigne de pression (Cp2) à un deuxième seuil haut (Pmax20) ;
- lorsque la valeur de la première consigne de pression (Cp1) est supérieure ou égale au premier seuil haut (Pmax10), et lorsque la valeur de la deuxième consigne de pression (Cp2) est supérieure ou égale au deuxième seuil haut (Pmax20) :
- établir la valeur de la première consigne de pression (Cp1) au premier seuil haut (Pmax10) ;
- établir la valeur de la deuxième consigne de pression (Cp2) au deuxième seuil haut (Pmax20) ; et
- établir la valeur de la troisième consigne de pression (Cp3) à un troisième seuil haut (Pmax30).

8. Procédé selon l'une quelconque des revendications précédentes, dans lequel, à l'issue de l'étape de définir une première consigne de pression (Cp1), une deuxième consigne de pression (Cp2) et une troisième consigne de pression (Cp3) et avant l'étape d'appliquer la première consigne de pression (Cp1) à la première servovalve (10), la deuxième consigne de pression (Cp2) à la deuxième servovalve (20) et la troisième consigne de pression (Cp3) à la troisième servovalve (30), le procédé comprend les étapes supplémentaires suivantes :

- lorsque la valeur de la première consigne de pression (Cp1) est supérieure ou égale à un premier seuil haut (Pmax10), et lorsque la valeur de la deuxième consigne de pression (Cp2) est inférieure à un deuxième seuil haut (Pmax20) :
- établir la valeur de la première consigne de pression (Cp1) au premier seuil haut (Pmax10) ;

- établir la valeur de la troisième consigne de pression (Cp3) a une valeur égale à :

$$Cp3 = |2*P1 - Cp1|$$

Où Cp3 est la valeur de la troisième consigne de pression, P1 est la valeur de la première pression moyenne d'alimentation, et Cp1 est la valeur de la première consigne de pression.
; et
- établir la valeur de la deuxième consigne de pression (Cp2) a une valeur égale à :

$$Cp2 = |2*P2 - Cp3|$$

Où Cp2 est la valeur de la deuxième consigne de pression, P2 est la valeur de la deuxième pression moyenne d'alimentation, et Cp3 est la valeur de la troisième consigne de pression.

9. Procédé selon l'une quelconque des revendications précédentes, dans lequel, à l'issue de l'étape de définir une première consigne de pression (Cp1), une deuxième consigne de pression (Cp2) et une troisième consigne de pression (Cp3), et avant l'étape d'appliquer la première consigne de pression (Cp1) à la première servovalve (10), la deuxième consigne de pression (Cp2) à la deuxième servovalve (20) et la troisième consigne de pression (Cp3) à la troisième servovalve (30), le procédé comprend les étapes supplémentaires suivantes :

- comparer la valeur de la première consigne de pression (Cp1) avec un premier seuil bas (Pmin10) ;
- comparer la valeur de la deuxième consigne de pression (Cp2) avec un deuxième seuil bas (Pmin20) ;
- lorsque la valeur de la première consigne de pression (Cp1) est inférieure ou égale au premier seuil bas (Pmin10), et lorsque la valeur de la deuxième consigne de pression (Cp2) est inférieure ou égale au deuxième seuil bas (Pmin20) :
- établir la valeur de la première consigne de pression (Cp1) au premier seuil bas (Pmin10) ;
- établir la valeur de la deuxième consigne de pression (Cp2) au deuxième seuil bas (Pmin20) ; et
- établir la valeur de la troisième consigne de pression (Cp3) à un troisième seuil bas (Pmin30).

10. Procédé selon l'une quelconque des revendications précédentes, dans lequel, à l'issue de l'étape de définir une première consigne de pression (Cp1), une deuxième consigne de pression (Cp2) et une troisième consigne de pression (Cp3), et avant l'étape d'appliquer la première consigne de pression (Cp1) à la première servovalve (10), la deuxième consigne de pression (Cp2) à la deuxième servovalve (20) et la troisième consigne de pression (Cp3) à la troisième servovalve (30), le procédé comprend les étapes supplémentaires suivantes :

- lorsque la valeur de la première consigne de pression (Cp1) est inférieure ou égale à un premier seuil bas (Pmin10), et lorsque la valeur de la deuxième consigne d'alimentation est supérieure à un deuxième seuil bas (Pmin20) ;
- établir la valeur de la première consigne de pression (Cp1) au premier seuil bas (Pmin10) ;
- établir la valeur de la troisième consigne de pression (Cp3) a une valeur égale à :

$$Cp3 = |2*P1 - Cp1|$$

Où Cp3 est la valeur de la troisième consigne de pression, P1 est la valeur de la première pression moyenne d'alimentation, et Cp1 est la valeur de la première consigne de pression.
; et
- établir la valeur de la deuxième consigne de pression (Cp2) a une valeur égale à :

$$Cp2 = |2*P2 - Cp3|$$

Où Cp2 est la valeur de la deuxième consigne de pression, P2 est la valeur de la deuxième pression moyenne d'alimentation, et Cp3 est la valeur de la troisième consigne de pression.

**11.** Procédé selon l'une quelconque des revendications précédentes, comprenant les étapes supplémentaires suivantes :

- mesurer une troisième valeur (I11) représentative de la première pression (P10) ;
- définir une première commande à appliquer à la première servovalve (10) en fonction de la troisième valeur (I11) et de la première consigne de pression (Cp1) à l'aide d'une troisième boucle d'asservissement (95) ;
- mesurer une quatrième valeur (I21) représentative de la deuxième pression (P20) ;
- définir une deuxième commande à appliquer à la deuxième servovalve en fonction de la quatrième valeur (I21) et de la deuxième consigne de pression (Cp2) à l'aide d'une quatrième boucle d'asservissement (96) ;
- mesurer une cinquième valeur (I31) représentative de la troisième pression (P30) ;
- définir une troisième commande à appliquer à la deuxième servovalve en fonction de la cinquième valeur (I31) et de la troisième consigne de pression (Cp3) à l'aide d'une cinquième boucle d'asservissement (97).

**12.** Dispositif de freinage (100) comprenant :

- une première servovalve (10), une deuxième servovalve (20), une troisième servovalve (30) ;
- un premier frein (1) d'une première roue (R1) comprenant un premier actionneur de freinage (5.1) et un deuxième actionneur de freinage (5.2) ;
- un deuxième frein (2) d'une deuxième roue (R2) comprenant un troisième actionneur de freinage (7.1) et un quatrième actionneur de freinage (7.2) ;
- la première servovalve (10) étant agencée pour délivrer une première pression (P10) au premier actionneur (5.1), la deuxième servovalve (20) étant agencée pour délivrer une deuxième pression (P20) au troisième actionneur (7.1); le dispositif (100) comprenant également :
- un premier capteur de couple de freinage (8) disposé sur le premier frein (1) pour fournir une première mesure d'un premier couple de freinage (C1) appliqué par le premier frein (1) sur la première roue (R1) ;
- un deuxième capteur de couple de freinage (9) disposé sur le deuxième frein (2) pour fournir une deuxième mesure d'un deuxième couple de freinage (C2) appliqué par le deuxième frein (2) sur la deuxième roue (R2) ;
- une unité de commande (40) reliée à la première servovalve (10), la deuxième servovalve (20), la troisième servovalve (30), au premier capteur de couple (8) et au deuxième capteur de couple (9) ;
- une interface de commande de freinage (42) agencée pour délivrer une instruction (If) de couple de freinage à l'unité de commande (40) ;

**caractérisé en ce que** :

- la troisième servovalve est agencée pour délivrer une troisième pression (P30) au deuxième actionneur (5.2) et au quatrième actionneur (7.2) ; et que

l'unité de commande (40) est agencée pour mettre en œuvre le procédé selon l'une quelconque des revendications 1 à 10.

**13.** Dispositif de freinage (100) selon la revendication 12, comprenant

- un premier capteur de pression (11) disposé sur une première sortie (12) de la première servovalve (10) pour fournir une première mesure d'une première pression (P10) d'un fluide en sortie de la première servovalve (10) ;
- un deuxième capteur de pression (21) disposé sur une deuxième sortie (22) de la deuxième servovalve (20) pour fournir une deuxième mesure d'une deuxième pression (P20) d'un fluide en sortie de la deuxième servovalve (20) ;
- un troisième capteur de pression (31) disposé sur une troisième sortie (32) de la troisième servovalve (30) pour fournir une troisième mesure d'une troisième pression (P30) d'un fluide en sortie de la troisième servovalve (30) ; l'unité de commande (40) étant agencée pour mettre en œuvre le procédé selon la revendication 11.

**14.** Aéronef (A) comprenant un dispositif de freinage (100) selon la revendication 12 ou 13.

**Patentansprüche**

**1.** Verfahren zum Steuern einer hydraulischen Bremsvorrichtung (100), wobei die Bremsvorrichtung (100) umfasst

- ein erstes Servoventil (10), ein zweites Servoventil (20), ein drittes Servoventil (30);
- eine erste Bremse (1) eines ersten Rades (R1), die mindestens einen ersten Bremsaktor (5.1) und einen zweiten Bremsaktor (5.2) umfasst, um ein erstes Bremsmoment (C1) auf das erste Rad (R1) aufzubringen;
- eine zweite Bremse (2) eines zweiten Rades (R2), die mindestens einen dritten Bremsaktor (7.1) und einen vierten Bremsaktor (7.2) umfasst, um ein zweites Bremsmoment (C2) auf das zweite Rad (R2) aufzubringen;

bei dem das erste Servoventil (10) ausgebildet ist, um einen ersten Druck (P10) an den ersten Aktor (5.1) zu liefern, das zweite Servoventil (20) ausgebildet ist, um einen zweiten Druck (P20) an den dritten Aktor (7.1) zu liefern, das dritte Servoventil (30) ausgebildet ist, um einen dritten Druck (P30) an den zweiten Aktor (5.2) und an den vierten Aktor (7.2) zu liefern;
wobei das Verfahren die folgenden Schritte umfasst:

- Empfangen einer Bremsmomentanweisung (If);
- auf der Grundlage der empfangenen Bremsmomentanweisung (If), Festlegen eines ersten Bremsmomentsollwerts (Cf1) für die erste Bremse (1) und eines zweiten Bremsmomentsollwerts (Cf2) für die zweite Bremse (2);
- Messen eines ersten Werts eines ersten Parameters (I8), der repräsentativ für das erste Bremsmoment (C1) ist;
- Definieren eines ersten mittleren Versorgungsdrucks (P1) zum Aufbringen auf die erste Bremse (1) in Abhängigkeit von dem ersten Wert des ersten Parameters und des ersten Bremssollwerts (Cf1) mit Hilfe eines ersten Regelkreises (93);
- Messen eines zweiten Werts eines zweiten Parameters (I9), der repräsentativ für das zweite Bremsmoment (C2) ist;
- Definieren eines zweiten mittleren Versorgungsdrucks (P2) zum Aufbringen auf die zweite Bremse (2) in Abhängigkeit von dem zweiten Wert des zweiten Parameters und des zweiten Bremssollwerts (Cf2) mit Hilfe eines zweiten Regelkreises (94);
- auf der Grundlage des ersten mittleren Versorgungsdrucks (P1) und des zweiten mittleren Versorgungsdrucks (P2), Definieren eines ersten Drucksollwerts (Cp1), eines zweiten Drucksollwerts (Cp2) und eines dritten Drucksollwerts (Cp3);
- Aufbringen des ersten Drucksollwerts (Cp1) auf das erste Servoventil (10), des zweiten Drucksollwerts (Cp2) auf das zweite Servoventil (20) und des dritten Drucksollwerts (Cp3) auf das dritte Servoventil (30).

2. Verfahren nach Anspruch 1, umfassend den zusätzlichen Schritt des Begrenzens der Steigerungsgeschwindigkeit des ersten Drucksollwerts (Cp1) und/oder des zweiten Drucksollwerts (Cp2) und/oder des dritten Drucksollwerts (Cp3).

3. Verfahren nach einem der vorhergehenden Ansprüche, bei dem der Schritt des Definierens eines ersten Drucksollwerts (Cp1), eines zweiten Drucksollwerts (Cp2) und eines dritten Drucksollwerts (Cp3) die folgenden Vorgänge umfasst:

- Definieren eines Werts für den ersten mittleren Versorgungsdruck (P1) der ersten Bremse (1);
- Definieren eines Werts für den zweiten mittleren Versorgungsdruck (P2) der zweiten Bremse (2);
- Festlegen des Werts für den dritten Drucksollwert (Cp3);
- Festlegen des Werts für den ersten Drucksollwert (Cp1) auf einen Wert gleich:

$$Cp1 = \left| 2*P1 - Cp3 \right|$$

wobei Cp1 der Wert des ersten Drucksollwerts ist, P1 der Wert des ersten mittleren Versorgungsdrucks ist und Cp3 der Wert des dritten Drucksollwerts ist;
- Festlegen des Werts des zweiten Drucksollwerts (Cp2) auf einen Wert gleich:

$$Cp2 = \left| 2*P2 - Cp3 \right|$$

wobei Cp2 der Wert des zweiten Drucksollwerts ist, P2 der Wert des zweiten mittleren Versorgungsdrucks ist und Cp3 der Wert des dritten Drucksollwert ist.

4. Verfahren nach Anspruch 3, bei dem der Wert des dritten Drucksollwerts (Cp3) auf einen Wert festgelegt wird, der dem arithmetischen Mittel des ersten mittleren Versorgungsdrucks (P1) und des zweiten mittleren Versorgungsdrucks (P2) entspricht.

5. Verfahren nach Anspruch 3, bei dem der Wert des dritten Drucksollwerts (Cp3) auf einen Wert festgelegt wird, der dem kleinsten Wert unter dem ersten mittleren Versorgungsdruck (P1) und dem zweiten mittleren Versorgungsdruck (P2) entspricht.

6. Verfahren nach Anspruch 3, bei dem der Wert des dritten Drucksollwerts (Cp3) auf den höchsten Wert unter dem ersten mittleren Versorgungsdruck (P1) und dem zweiten mittleren Versorgungsdruck (P2) festgelegt wird.

7. Verfahren nach einem der vorhergehenden Ansprüche, bei dem nach dem Schritt des Definierens eines ersten Drucksollwerts (Cp1), eines zweiten Drucksollwerts (Cp2) und eines dritten Drucksollwerts (Cp3) und vor dem Schritt des Aufbringens des ersten Drucksollwerts (Cp1) auf das erste Servoventil (10), des zweiten Drucksollwerts (Cp2) auf das zweite Servoventil (20) und des dritten Drucksollwerts (Cp3) auf das dritte Servoventil (30) das Verfahren die folgenden zusätzlichen Schritte umfasst:

   - Vergleichen des Werts des ersten Drucksollwerts (Cp1) mit einem ersten hohen Schwellenwert (Pmax10);
   - Vergleichen des Werts des zweiten Drucksollwerts (Cp2) mit einem zweiten hohen Schwellenwert (Pmax20);
   - wenn der Wert des ersten Drucksollwerts (Cp1) größer oder gleich dem ersten hohen Schwellenwert (Pmax10) ist und wenn der Wert des zweiten Drucksollwerts (Cp2) größer oder gleich dem zweiten hohen Schwellenwert (Pmax20) ist:
   - Festlegen des Werts des ersten Drucksollwerts (Cp1) auf den ersten hohen Schwellenwert (Pmax10);
   - Festlegen des Werts des zweiten Drucksollwerts (Cp2) auf den zweiten hohen Schwellenwert (Pmax20); und
   - Festlegen des Werts des dritten Drucksollwerts (Cp3) auf einen dritten hohen Schwellenwert (Pmax30).

8. Verfahren nach einem der vorhergehenden Ansprüche, bei dem nach dem Schritt des Definierens eines ersten Drucksollwerts (Cp1), eines zweiten Drucksollwerts (Cp2) und eines dritten Drucksollwerts (Cp3) und vor dem Schritt des Aufbringens des ersten Drucksollwerts (Cp1) auf das erste Servoventil (10), des zweiten Drucksollwerts (Cp2) auf das zweite Servoventil (20) und des dritten Drucksollwerts (Cp3) auf das dritte Servoventil (30), wobei das Verfahren die folgenden zusätzlichen Schritte umfasst:

   - wenn der Wert des ersten Drucksollwerts (Cp1) größer oder gleich einem ersten hohen Schwellenwert (Pmax10) ist und wenn der Wert des zweiten Drucksollwerts (Cp2) kleiner als ein zweiter hoher Schwellenwert (Pmax20) ist:
   - Festlegen des Werts des ersten Drucksollwerts (CP1) auf den ersten hohen Schwellenwert (Pmax10);
   - Festlegen des Werts des dritten Drucksollwerts (Cp3) auf einen Wert gleich:

$$Cp3 = |2*P1 - Cp1|$$

wobei Cp3 der Wert des dritten Drucksollwerts ist, P1 der Wert des ersten mittleren Versorgungsdrucks ist und Cp1 der Wert des ersten Drucksollwerts ist; und
   - Festlegen des Werts des zweiten Drucksollwerts (Cp2) auf einen Wert gleich:

$$Cp2 = |2*P2 - Cp3|$$

wobei Cp2 der Wert des zweiten Drucksollwerts ist, P2 der Wert des zweiten mittleren Versorgungsdrucks ist und Cp3 der Wert des dritten Drucksollwerts ist.

9. Verfahren nach einem der vorhergehenden Ansprüche, bei dem nach dem Schritt des Definierens eines ersten Drucksollwerts (Cp1), eines zweiten Drucksollwerts (Cp2) und eines dritten Drucksollwerts (Cp3) und vor dem Schritt des Aufbringens des ersten Drucksollwerts (Cp1) auf das erste Servoventil (10), des zweiten Drucksollwerts (Cp2) auf das zweite Servoventil (20) und des dritten Drucksollwerts (Cp3) auf das dritte Servoventil (30) das Verfahren die folgenden zusätzlichen Schritte umfasst:

   - Vergleichen des Werts des ersten Drucksollwerts (Cp1) mit einem ersten niedrigen Schwellenwert (Pmin10);

- Vergleichen des Werts des zweiten Drucksollwerts (Cp2) mit einem zweiten niedrigen Schwellenwert (Pmin20);
- wenn der Wert des ersten Drucksollwerts (Cp1) kleiner oder gleich dem ersten niedrigen Schwellenwert (Pmin10) ist und wenn der Wert des zweiten Drucksollwerts (Cp2) kleiner oder gleich dem zweiten niedrigen Schwellenwert (Pmin20) ist:
- Festlegen des Werts des ersten Drucksollwerts (Cp1) auf den ersten niedrigen Schwellenwert (Pmin10); und
- Festlegen des Werts des zweiten Drucksollwerts (Cp2) auf den zweiten niedrigen Schwellenwert (Pmin20); und
- Festlegen des Werts des dritten Drucksollwerts (Cp3) auf einen dritten niedrigen Schwellenwert (Pmin30).

10. Verfahren nach einem der vorhergehenden Ansprüche, bei dem nach dem Schritt des Definierens eines ersten Drucksollwerts (Cp1), eines zweiten Drucksollwerts (Cp2) und eines dritten Drucksollwerts (Cp3) und vor dem Schritt des Aufbringens des ersten Drucksollwerts (Cp1) auf das erste Servoventil (10), des zweiten Drucksollwerts (Cp2) auf das zweite Servoventil (20) und des dritten Drucksollwerts (Cp3) auf das dritte Servoventil (30) das Verfahren die folgenden zusätzlichen Schritte umfasst:

- wenn der Wert des ersten Drucksollwerts (Cp1) kleiner oder gleich einem ersten niedrigen Schwellenwert (Pmin10) ist und wenn der Wert des zweiten Versorgungssollwerts größer als ein zweiter niedriger Schwellenwert (Pmin20) ist;
- Festlegen des Werts des ersten Drucksollwerts (Cp1) auf den ersten niedrigen Schwellenwert (Pmin10);
- Festlegen des Werts des dritten Drucksollwerts (Cp3) auf einen Wert gleich:

$$Cp3 = |2 * P1 - Cp1|$$

wobei Cp3 der Wert des dritten Drucksollwerts ist, P1 der Wert des ersten mittleren Versorgungsdrucks ist und Cp1 der Wert des ersten Drucksollwerts ist; und
- Festlegen des Werts des zweiten Drucksollwerts (Cp2) auf einen Wert gleich:

$$Cp2 = |2 * P2 - Cp3|$$

wobei Cp2 der Wert des zweiten Drucksollwerts ist, P2 der Wert des zweiten mittleren Versorgungsdrucks ist und Cp3 der Wert des dritten Drucksollwerts ist.

11. Verfahren nach einem der vorhergehenden Ansprüche, umfassend die folgenden zusätzlichen Schritte:

- Messen eines dritten Werts (I11), der repräsentativ für den ersten Druck (P10) ist;
- Definieren eines ersten Befehls zum Aufbringen auf das erste Servoventil (10) in Abhängigkeit von dem dritten Wert (I11) und dem ersten Drucksollwert (Cp1) mit Hilfe eines dritten Regelkreises (95);
- Messen eines vierten Werts (I21), der repräsentativ für den zweiten Druck (P20) ist;
- Definieren eines zweiten Befehls zum Aufbringen auf das zweite Servoventil in Abhängigkeit von dem vierten Wert (I21) und dem zweiten Drucksollwert (Cp2) mit Hilfe eines vierten Regelkreises (96);
- Messen eines fünften Werts (I31), der repräsentativ für den dritten Druck (P30) ist;
- Definieren eines dritten Befehls zum Aufbringen auf das zweite Servoventil in Abhängigkeit von dem fünften Wert (I31) und dem dritten Drucksollwert (Cp3) mit Hilfe eines fünften Regelkreises (97).

12. Bremsvorrichtung (100), umfassend:

- ein erstes Servoventil (10), ein zweites Servoventil (20), ein drittes Servoventil (30);
- eine erste Bremse (1) eines ersten Rades (R1), die einen ersten Bremsaktor (5.1) und einen zweiten Bremsaktor (5.2) umfasst;
- eine zweite Bremse (2) eines zweiten Rades (R2), die einen dritten Bremsaktor (7.1) und einen vierten Bremsaktor (7.2) umfasst;
- wobei das erste Servoventil (10) ausgebildet ist, um einen ersten Druck (P10) an den ersten Aktor (5.1) zu liefern, wobei das zweite Servoventil (20) ausgebildet ist, um einen zweiten Druck (P20) an den dritten Aktor (7.1) zu liefern; wobei die Vorrichtung (100) ferner umfasst:
- einen ersten Bremsmomentsensor (8), der an der ersten Bremse (1) angeordnet ist, um eine erste Messung eines ersten Bremsmoments (C1) zu liefern, das von der ersten Bremse (1) auf das erste Rad (R1) aufgebracht wird;

- einen zweiten Bremsmomentsensor (9), der an der zweiten Bremse (2) angeordnet ist, um eine zweite Messung eines zweiten Bremsmoments (C2) zu liefern, das von der zweiten Bremse (2) auf das zweite Rad (R2) aufgebracht wird;
- eine Steuereinheit (40), die mit dem ersten Servoventil (10), dem zweiten Servoventil (20), dem dritten Servoventil (30), dem ersten Bremsmomentsensor (8) und dem zweiten Bremsmomentsensor (9) verbunden ist;
- eine Bremssteuerschnittstelle (42), die ausgebildet ist, um eine Bremsmomentanweisung (If) an die Steuereinheit (40) zu liefern;

**dadurch gekennzeichnet, dass**:

- das dritte Servoventil ausgebildet ist, um einen dritten Druck (P30) an den zweiten Aktor (5.2) und an den vierten Aktor (7.2) zu liefern; und dass

die Steuereinheit (40) ausgebildet ist, um das Verfahren nach einem der Ansprüche 1 bis 10 durchzuführen.

13. Bremsvorrichtung (100) nach Anspruch 12, umfassend

- einen ersten Drucksensor (11), der an einem ersten Ausgang (12) des ersten Servoventils (10) angeordnet ist, um eine erste Messung eines ersten Drucks (P10) eines Fluids am Ausgang des ersten Servoventils (10) zu liefern;
- einen zweiten Drucksensor (21), der an einem zweiten Ausgang (22) des zweiten Servoventils (20) angeordnet ist, um eine zweite Messung eines zweiten Drucks (P20) eines Fluids am Ausgang des zweiten Servoventils (20) zu liefern;
- einen dritten Drucksensor (31), der an einem dritten Ausgang (32) des dritten Servoventils (30) angeordnet ist, um eine dritte Messung eines dritten Drucks (P30) eines Fluids am Ausgang des dritten Servoventils (30) zu liefern;

wobei die Steuereinheit (40) ausgebildet ist, um das Verfahren nach Anspruch 11 durchzuführen.

14. Luftfahrzeug (A), umfassend eine Bremsvorrichtung (100) nach Anspruch 12 oder 13.

**Claims**

1. Method of controlling a hydraulic braking device (100), the braking device (100) comprising

- a first servovalve (10), a second servovalve (20), a third servovalve (30);
- a first brake (1) of a first wheel (R1) comprising at least a first braking actuator (5.1) and a second braking actuator (5.2) for applying a first braking torque (C1) to the first wheel (R1);
- a second brake (2) of a second wheel (R2) comprising at least a third braking actuator (7.1) and a fourth braking actuator (7.2) for applying a second braking torque (C2) to the second wheel (R2);

in which the first servovalve (10) is adapted to deliver a first pressure (P10) to the first actuator (5.1), the second servovalve (20) is adapted to deliver a second pressure (P20) to the third actuator (7.1), the third servovalve (30) is adapted to deliver a third pressure (P30) to the second actuator (5.2) and to the fourth actuator (7.2);
the method comprising the following steps:

- receiving a braking torque instruction (If);
- on the basis of the received braking torque instruction (If), setting a first braking torque set point (Cf1) for the first brake (1) and a second braking torque set point (Cf2) for the second brake (2);
- measuring a first value of a first parameter (18) representative of the first braking torque (C1);
- defining a first mean supply pressure (P1) to be applied to the first brake (1) as a function of the first value of the first parameter and of the first braking set point (Cf1) with the aid of a first servocontrol loop (93);
- measuring a second value of a second parameter (19) representative of the second braking torque (C2);
- defining a second mean supply pressure (P2) to be applied to the second brake (2) as a function of the second value of the second parameter and of the second braking set point (Cf2) with the aid of a second servocontrol loop (94);

- on the basis of the first mean supply pressure (P1) and the second mean supply pressure (P2), defining a first pressure set point (Cp1), a second pressure set point (Cp2) and a third pressure set point (Cp3);
- applying the first pressure set point (Cp1) to the first servovalve (10), the second pressure set point (Cp2) to the second servovalve (20) and the third pressure set point (Cp3) to the third servovalve (30).

2. Method according to Claim 1, comprising the supplementary step of limiting the rate of increase of the first pressure set point (Cp1) and/or of the second pressure set point (Cp2) and/or of the third pressure set point (Cp3).

3. Method according to either one of the preceding claims, in which the step of defining a first pressure set point (Cp1), a second pressure set point (Cp2) and a third pressure set point (Cp3) comprises the following operations:

- defining a value of the first mean supply pressure (P1) of the first brake (1);
- defining a value of the second mean supply pressure (P2) of the first brake (2);
- setting the value of the third pressure set point (Cp3);
- setting the value of the first pressure set point (Cp1) to a value equal to:

$$Cp1 = \left| 2*P1 - Cp3 \right|$$

where Cp1 is the value of the first pressure set point, P1 is the value of the first mean supply pressure and Cp3 is the value of the third pressure set point;
- setting the value of the second pressure set point (Cp2) to a value equal to:

$$Cp2 = \left| 2*P2 - Cp3 \right|$$

where Cp2 is the value of the second pressure set point, P2 is the value of the second mean supply pressure and Cp3 is the value of the third pressure set point.

4. Method according to Claim 3, in which the value of the third pressure set point (Cp3) is set to a value corresponding to the arithmetic mean of the first mean supply pressure (P1) and the second mean supply pressure (P2).

5. Method according to Claim 3, in which the value of the third pressure set point (Cp3) is set to a value corresponding to the lower of the first mean supply pressure (P1) and the second mean supply pressure (P2).

6. Method according to Claim 3, in which the value of the third pressure set point (Cp3) is set to the higher of the first mean supply pressure (P1) and the second mean supply pressure (P2).

7. Method according to any one of the preceding claims, in which, following the step of defining a first pressure set point (Cp1), a second pressure set point (Cp2) and a third pressure set point (Cp3) and before the step of applying the first pressure set point (Cp1) to the first servovalve (10), the second pressure set point (Cp2) to the second servovalve (20) and the third pressure set point (Cp3) to the third servovalve (30), the method comprises the following supplementary steps:

- comparing the value of the first pressure set point (Cp1) to a first high threshold (Pmax10);
- comparing the value of the second pressure set point (Cp2) to a second high threshold (Pmax20);
- if the value of the first pressure set point (Cp1) is greater than or equal to the first high threshold (Pmax10), and if the value of the second pressure set point (Cp2) is greater than or equal to the second high threshold (Pmax20):
- setting the value of the first pressure set point (Cp1) to the first threshold (Pmax10);
- setting the value of the second pressure set point (Cp2) to the second high threshold (Pmax20); and
- setting the value of the third pressure set point (Cp3) to a third high threshold (Pmax30).

8. Method according to any one of the preceding claims, in which, following the step of defining a first pressure set point (Cp1), a second pressure set point (Cp2) and a third pressure set point (Cp3) and before the step of applying the first pressure set point (Cp1) to the first servovalve (10), the second pressure set point (Cp2) to the second servovalve (20) and the third pressure set point (Cp3) to the third servovalve (30), the method comprises the following supplementary steps:

- if the value of the first pressure set point (Cp1) is greater than or equal to a first high threshold (Pmax10), and if the value of the second pressure set point (Cp2) is less than a second high threshold (Pmax20):
- setting the value of the first pressure set point (Cp1) to the first high threshold (Pmax10);
- setting the value of the third pressure set point (Cp3) to a value equal to:

$$Cp3 = \left| 2*P1 - Cp1 \right|$$

where Cp3 is the value of the third pressure set point, P1 is the value of the first mean supply pressure, and Cp1 is the value of the first pressure set point; and
- setting the value of the second pressure set point (Cp2) to a value equal to:

$$Cp2 = \left| 2*P2 - Cp3 \right|$$

where Cp2 is the value of the second pressure set point, P2 is the value of the second mean supply pressure, and Cp3 is the value of the third pressure set point.

9. Method according to any one of the preceding claims, in which, following the step of defining a first pressure set point (Cp1), a second pressure set point (Cp2) and a third pressure set point (Cp3) and before the step of applying the first pressure set point (Cp1) to the first servovalve (10), the second pressure set point (Cp2) to the second servovalve (20) and the third pressure set point (Cp3) to the third servovalve (30), the method comprises the following supplementary steps:

- comparing the value of the first pressure set point (Cp1) with a first low threshold (Pmin10);
- comparing the value of the second pressure set point (Cp2) with a second low threshold (Pmin20);
- if the value of the first pressure set point (Cp1) is less than or equal to the first low threshold (Pmin10), and if the value of the second pressure set point (Cp2) is less than or equal to the second low threshold (Pmin20):
- setting the value of the first pressure set point (Cp1) to the first low threshold (Pmin10);
- setting the value of the second pressure set point (Cp2) to the second low threshold (Pmin20); and
- setting the value of the third pressure set point (Cp3) to a third low threshold (Pmin30).

10. Method according to any one of the preceding claims, in which, following the step of defining a first pressure set point (Cp1), a second pressure set point (Cp2) and a third pressure set point (Cp3) and before the step of applying the first pressure set point (Cp1) to the first servovalve (10), the second pressure set point (Cp2) to the second servovalve (20) and the third pressure set point (Cp3) to the third servovalve (30), the method comprises the following supplementary steps:

- if the value of the first pressure set point (Cp1) is less than or equal to a first low threshold (Pmin10), and if the value of the second supply set point is greater than a second low threshold (Pmin20):
- setting the value of the first pressure set point (Cp1) to the first low threshold (Pmin10);
- setting the value of the third pressure set point (Cp3) to a value equal to:

$$Cp3 = \left| 2*P1 - Cp1 \right|$$

where Cp3 is the value of the third pressure set point, P1 is the value of the first mean supply pressure, and Cp1 is the value of the first pressure set point; and
- setting the value of the second pressure set point (Cp2) to a value equal to:

$$Cp2 = \left| 2*P2 - Cp3 \right|$$

where Cp2 is the value of the second pressure set point, P2 is the value of the second mean supply pressure, and Cp3 is the value of the third pressure set point.

11. Method according to any one of the preceding claims, comprising the following supplementary steps:

- measuring a third value (I11) representative of the first pressure (P10);
- defining a first command to be applied to the first servovalve (10) as a function of the third value (I11) and of the first pressure set point (Cp1) with the aid of a third servocontrol loop (95);
- measuring a fourth value (I21) representative of the second pressure (P20);
- defining a second command to be applied to the second servovalve as a function of the fourth value (I21) and of the second pressure set point (Cp2) with the aid of a fourth servocontrol loop (96);
- measuring a fifth value (I31) representative of the third pressure (P30);
- defining a third command to be applied to the second servovalve as a function of the fifth value (I31) and of the third pressure set point (Cp3) with the aid of a fifth servocontrol loop (97).

12. Braking device (100) comprising:

- a first servovalve (10), a second servovalve (20), a third servovalve (30);
- a first brake (1) of a first wheel (R1) comprising a first braking actuator (5.1) and a second braking actuator (5.2);
- a second brake (2) of a second wheel (R2) comprising a third braking actuator (7.1) and a fourth braking actuator (7.2);

the first servovalve (10) being adapted to deliver a first pressure (P10) to the first actuator (5.1), the second servovalve (20) being adapted to deliver a second pressure (P20) to the third actuator (7.1); the device (100) also comprising:

- a first braking torque sensor (8) disposed on the first brake (1) to supply a first measurement of a first braking torque (C1) applied by the first brake (1) to the first wheel (R1) ;
- a control unit (40) connected to the first servovalve (10), the second servovalve (20), the third servovalve (30), the first torque sensor (8) and the second torque sensor (9);
- a braking control interface (42) adapted to deliver a braking torque instruction (If) to the control unit (40);

**Characterized in that**:

- the third servovalve is adapted to deliver a third pressure to the second actuator (5.2) and to the fourth actuator (7.2); and **in that**
- the control unit (40) is adapted to execute the method according to any one of Claims 1 to 10.

13. Braking device (100) according to Claim 12, comprising

- a first pressure sensor (11) disposed at a first outlet (12) of the first servovalve (10) to supply a first measurement of a first pressure (P10) of a fluid at the outlet of the first servovalve (10);
- a second pressure sensor (21) disposed at a second outlet (22) of the second servovalve (20) to supply a second measurement of a second pressure (P20) of a fluid at the outlet of the second servovalve (20);
- a third pressure sensor (31) disposed at a third outlet (32) of the third servovalve (30) to supply a third measurement of a third pressure (P30) of a fluid at the outlet of the third servovalve (30);

the control unit (40) being adapted to execute the method according to Claim 11.

14. Aircraft (A) comprising a braking device (100) according to Claim 12 or 13.

Fig. 1

Fig. 2

Fig. 3

**Fig. 4**

EP 3 718 883 B1

**Fig. 5**

**EP 3 718 883 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5456523 A
- US 20180326955 A
- DE 4227157